(19) Europäisches Patentamt
European Patent Office
Office européen des brevets

(11) EP 0 580 885 B1

(12) EUROPÄISCHE PATENTSCHRIFT

(45) Veröffentlichungstag und Bekanntmachung des Hinweises auf die Patenterteilung:
02.12.1998 Patentblatt 1998/49

(51) Int Cl.⁶: H04L 25/38

(21) Anmeldenummer: 92112958.1

(22) Anmeldetag: 29.07.1992

(54) **Schnittstellenschaltung**

Interface circuit

Circuit d'interface

(84) Benannte Vertragsstaaten:
AT BE CH DE FR GB IT LI NL SE

(43) Veröffentlichungstag der Anmeldung:
02.02.1994 Patentblatt 1994/05

(73) Patentinhaber: SIEMENS AKTIENGESELLSCHAFT
80333 München (DE)

(72) Erfinder: Haug, Friedrich, Ing.
W-8000 München 90 (DE)

(56) Entgegenhaltungen:
EP-A- 0 005 943

• TIETZE & SCHENK 'Halbleitertechnik' 1981 , SPRINGER - VERLAG , BERLIN, DE
• IEEE TRANSACTIONS ON NUCLEAR SCIENCE Bd. 21, Nr. 1, Februar 1974, NEW YORK US Seiten 875 - 880 MACHEN 'The CAMAC serial systems description for long line, multicrate applications'

**Beschreibung**

Die Erfindung betrifft eine Schnittstellenschaltung. In einer solchen Schnittstellenschaltung kann sendeseitig wenigstens ein Nutzsignal-Bitstrom synchron jeweils mit dem Impulsbeginn der Impulse eines Taktsignals in ein flankengesteuertes Kippglied übernommen und einem nachfolgenden Nutzsignal-Differenzsender zugeführt werden, während das Taktsignal einem Taktsignal-Differenzsender direkt zugeführt wird, wobei die Komplementärausgänge der Differenzsender direkt an der Schnittstellenleitung liegen; empfangsseitig kann eine am Ausgang eines mit seinen Komplementäreingangen direkt an der Schnittstellenleitung liegenden Nutzsignal-Differenzempfängers auftretender Nutzsignal-Bitstrom synchron jeweils mit dem Impulsende der Impulse des Taktsignals in ein von einem eingangsseitig mit der Schnittstellenleitung verbundenen Taktsignal-Differenzempfänger her flankengesteuertes Kippglied übernommen werden.

Solche Schnittstellenschaltungen können beispielsweise an Schnittstellen zwischen dem Koppelnetz einerseits und Anschlußgruppen, dem Koordinationsprozessor oder der Steuerung für das Netz der zentralen Zeichengabekanäle andererseits oder zwischen Zeitstufengruppe und Raumstufengruppe innerhalb des Koppelnetzes eines Digitalvermittlungssystems EWSD vorgesehen sein, wo eine solche Schnittstelle beispielsweise für jede der beiden Übertragungsrichtungen ein Schnittstellenkabel mit z.B. vier oder acht Digitalsignalleitungen, insbesondere 1,892-Mbit/s-Sekundärmultiplexleitungen, ergänzt durch eine Taktsignalleitung, aufweisen kann.

Wird empfangsseitig zur Kippstufen-Taktansteuerung eine andere Taktimpulsflanke benutzt als auf der Sendeseite, so ist - bei Verwendung gleichsinnig anzusteuernder Kippglieder - eine Invertierung des über die Schnittstelle übertragenen Taktsignals erforderlich. Diese Invertierung kann mit Hilfe eines zwischen dem Ausgang des Taktsignal-Differenzempfängers und dem Clock-Eingang des Kippgliedes eingefügten NICHT-Gliedes bewirkt werden.

Die Erfindung geht demgegenüber einen vorteilhafteren anderen Weg. Erfindungsgemäß ist in einer Schnittstellenschaltung der eingangs umrissenen Art zwischen den Komplementärausgängen des Taktsignal-Differenzsenders und den Komplementäreingangen des Taktsignal-Differenzempfängers eine Leitungskreuzung vorgesehen, so daß der nichtinvertierende Senderausgang mit dem invertierenden Empfängereingang und der invertierende Senderausgang mit dem nichtinvertierenden Empfängereingang verbunden ist.

Diese Art der Taktinvertierung bringt neben dem Vorteil eines verringerten Bauteileaufwands den weiteren Vorteil mit sich, daß der Toleranzbereich des Laufzeitunterschiede zwischen der der Taktübertragung dienenden Schnittstellenverbindung und der der Nutzsignalübertragung dienenden Schnittstellenverbindung, der von Einfluß auf die maximal zulässige Länge der Schnittstellenleitung ist, durch den Wegfall eines NICHT-Gliedes kleiner gehalten werden kann und somit eine größere Schnittstellenleitungslänge zuläßt.

Es sei an dieser Stelle bemerkt, daß es (aus EP 0005943 A1) bekannt ist, zur Datenübertragung auf einer Übertragungsleitung mit einer deren obere Bitratengrenze A überschreitenden Übertragungsbitrate C sendeseitig den Datensender mit der Übertragungsbitrate C zu betreiben und zugleich auf einer gesonderten Leitung ein Taktsignal der Frequenz $\frac{C}{N}$ mit $\frac{C}{N} < A$ zu übertragen und empfangsseitig die übertragenen Daten nach Maßgabe des genannten Taktsignals in eine Reihe von Datenspeichern einzugeben und aus diesen in einem seriellen Datenstrom nach Maßgabe eines Empfangstaktsignals wieder auszulesen.
Nähere Berührungspunkte mit der Erfindung sind nicht gegeben.

In weiterer Ausgestaltung der Erfindung kann eine hinter der Schnittstellenleitung liegende empfangsseitige Leitungskreuzung vorgesehen sein; dies beläßt es sendeseitig bei nichtinvertierten Takt-Komplementärsignalen und vermeidet zugleich eine Taktsignalinvertierung innerhalb der Schnittstellenleitung.

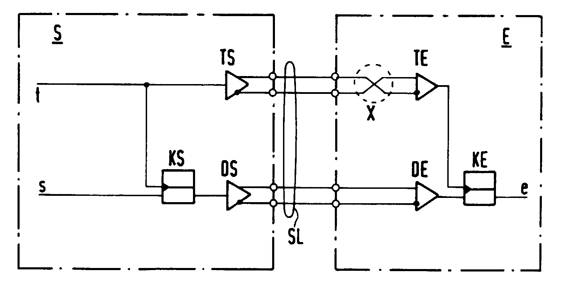

Anhand der Zeichnung wird die Erfindung noch näher erläutert. Die Zeichnung zeigt ein Ausführungsbeispiel einer Schnittstellenschaltung gemäß der Erfindung.

In der in der Zeichnung skizzierten Schnittstellenschaltung ist ein sendeseitiger Schnittstellenabschluß S über eine die eigentliche Schnittstelle bildende Schnittstellenleitung SL mit einem empfangsseitigen Schnittstellenabschluß E verbunden. Sendeseitig möge über eine Nutzsignalleitung s ein über die Schnittstelle zu übertragender Nutzsignal-Bitstrom zugeführt werden, dessen Bitrate beispielsweise 8,192 Mbit/s betragen mag. Dieser Nutzsignal-Bitstrom werde in ein flankengesteuertes Kippglied KS übernommen, und zwar synchron jeweils mit dem Impulsbeginn der Impulse eines (im Beispiel 8,192 Mbit/s-)Taktsignals, das auf einer mit dem Clock-Eingang des flankengesteuerten Kippgliedes KS verbundenen Taktsignalleitung t zugeführt werden möge. Vom Kippglied KS wird das Nutzsignal einem nachfolgenden Nutzsignal-Differenzsender DS zugeführt, dessen Komplementärausgänge direkt an der Schnittstellenleitung SL liegen. Zugleich wird das auf der Taktsignalleitung t auftretende Taktsignal einem Taktsignal-Differenzsender TS direkt zugeführt, wobei die Komplementärausgänge des Taktsignal-Differenzsenders TS wiederum direkt an der Schnittstellenleitung SL liegen.
Es sei bemerkt, daß neben dem in der Zeichnung skizzierten Nutzsignalweg s - KS - DS auch weitere derartige Nutzsignalwege für weitere Nutzsignal-Bitströme vorgesehen sein können, die in entsprechender Weise ebenfalls mit dem auf der Taktsignalleitung t auftretenden Bittakt in zugehörige Kippglieder übernommen und nachfolgenden Nutzsignal-Differenzsendern zugeführt werden.

Empfangsseitig liegt in dem in der Zeichnung skizzierten Nutzsignalweg ein Nutzsignal-Differenzempfänger DE mit seinen Komplementäreingängen direkt an der Schnittstellenleitung SL; das Ausgangssignal des Nutzsignal-Differenzempfängers DE wird in ein flankengesteuertes Kippglied KE übernommen, von dem aus eine empfangsseitige Nutzsignalleitung e weiterführt. Die Übernahme des Nutzsignal-Bitstroms in das flankengesteuerte Kippglied KE geschieht synchron jeweils mit dem Impulsende der Impulse des von der (sendeseitigen) Taktsignalleitung t herrührenden Taktsignals. Dieses Taktsignal gelangt von den Komplementärausgängen des sendeseitigen Taktsignal-Differenzsenders TS zu den Komplementäreingängen eines empfangsseitigen Taktsignal-Differenzempfängers TE, dessen Ausgang zu dem Clock-Eingang des flankengesteuerten Kippgliedes KE führt. Auch hier kann vom Taktsignal-Differenzempfänger TE her jeweils eine Mehrzahl von flankengesteuerten Kippgliedern gesteuert werden, wenn über die Schnittstellenschaltung eine Mehrzahl von Nutzsignal-Bitströmen auf zu einander parallelen Wegen übertragen wird.

Um zu ermöglichen, daß die Übernahme der Nutzsignal-Bitströme jeweils in ein flankengesteuertes Kippglied (KS, KE) empfangsseitig nicht mit der gleichen Taktimpulsflanke vor sich geht wie auf der Sendeseite, ist zwischen den Komplementärausgängen des Taktsignal-Differenzsenders TS und den Komplementäreingängen des Taktsignal-Differenempfängers TE eine Leitungskreuzung X, und zwar eine hinter der Schnittstellenleitung SL liegende empfangsseitige Leitungskreuzung, vorgesehen. Diese Leitungskreuzung bewirkt, daß der nichtinvertierende Ausgang des Taktsignal-Differenzsenders TS mit dem invertierenden Eingang des Taktsignal-Differenzempfängers TE verbunden wird und der invertierende Senderausgang mit dem nichtinvertierenden Empfängereingang, so daß die erforderliche Taktinvertierung zustande kommt.

## Patentansprüche

1. Schnittstellenschaltung,

bei der sendeseitig wenigstens ein Nutzsignal-Bitstrom synchron jeweils mit dem Impulsbeginn der Impulse eines Taktsignals in ein flankengesteuertes Kippglied (KS) übernommen und einem nachfolgenden Nutzsignal-Differenzsender (DS) zugeführt wird, während das Taktsignal einem Taktsignal-Differenzsender (TS) direkt zugeführt wird, wobei die Komplementärausgänge der Differenzsender (DS; TS) direkt an der Schnittstellenleitung (SL) liegen, und

bei der empfangsseitig ein am Ausgang eines mit seinem Komplementäreingängen direkt an der Schnittstellenleitung (SL) liegenden Nutzsignal-Differenzempfängers (DE) auftretender Nutzsignal-Bitstrom synchron jeweils mit dem Impulsende der Impulse des Taktsignals in ein von einem eingangsseitig mit der Schnittstellenleitung (SL) verbundenen Taktsignal-Differenzempfänger (TE) her flankengesteuertes Kippglied (KE) übernommen wird,

**dadurch gekennzeichnet,**

daß zwischen den Komplementärausgängen des Taktsignal-Differenzsenders (TS) und den Komplementäreingängen des Taktsignal-Differenzempfängers (TE) eine Leitungskreuzung (X) vorgesehen ist, so daß der nichtinvertierende Senderausgang mit dem invertierenden Empfängereingang und der invertierende Senderausgang mit dem nichtinvertierenden Empfängereingang verbunden wird.

2. Schnittstellenschaltung nach Anspruch 1,
**dadurch gekennzeichnet,**
daß eine hinter der Schnittstellenleitung (SL) liegende empfangsseitige Leitungskreuzung (X) vorgesehen ist.

## Claims

1. Interface circuit, in which, at the transmitting end, at least one user-signal bit stream is transferred into an edge-controled flip-flop (KS) in each case synchronously with the beginning of a pulse of the pulses of a clock signal, and is supplied to a subsequent user-signal difference transmitter (DS) whilst the clock signal is directly supplied to a clock-signal difference transmitter (TS), the complementary outputs of the difference transmitters (DS; TS) being connected directly to the interface line (SL) and in which, at the receiving end, a user-signal bit stream occurring at the output of a user-signal difference receiver (DE) connected with its complementary inputs directly to the interface line (SL) is transferred in each case synchronously with the end of a pulse of the pulses of the clock signal into a flip-flop (KE) which is edge controlled from a clock-signal difference receiver (TE) which is connected to the interface line (SL) at the input end, characterized in that a line cross-over (X) is provided between the complementary outputs of the clock-signal difference transmitter (TS) and the complementary inputs of the clock-signal difference receiver (TE) so that the non-inverting transmitter output is connected to the inverting receiver input and the inverting transmitter output is connected to the non-inverting receiver input.

2. Interface circuit according to Claim 1, characterized in that a line cross-over (X) located behind the interface line (SL) is provided at the receiving end.

**Revendications**

1. Circuit d'interface dans lequel au moins un courant de bits de signaux utiles est pris en charge côté émission dans une bascule (KS) commandée par flanc, en synchronisme avec le début d'impulsion des impulsions d'un signal d'horloge et envoyé à un émetteur (DS) différentiel de signaux utiles qui suit, tandis que le signal d'horloge est envoyé directement à un émetteur (TS) différentiel de signaux d'horloge, les sorties complémentaires de l'émetteur (DS ; TS) différentiel étant directement en contact avec la ligne (SL) d'interface, et

dans lequel, côté réception, un courant de bits de signaux utiles apparaissant à la sortie d'un récepteur (DE) différentiel de signaux utiles se trouvant directement en contact avec la ligne (SL) d'interface par ses entrées complémentaires est, en synchronisme avec la fin d'impulsion des impulsions du signal d'horloge, pris en charge dans une bascule (KE) commandée par flanc par un récepteur (TE) différentiel de signaux d'horloge relié côté entrée à la ligne (SL) d'interface,

caractérisé en ce que qu'il est prévu une intersection (X) de lignes entre les sorties complémentaires de l'émetteur (TS) différentiel de signaux d'horloge et les entrées complémentaires du récepteur différentiel de signaux d'horloge, si bien que la sortie d'émetteur non inverseuse est reliée à l'entrée de récepteur inverseuse et que la sortie de récepteur inverseuse est reliée à l'entrée de récepteur non inverseuse.

2. Circuit d'interface suivant la revendication 1, caractérisé en ce qu'il est prévu une intersection (X) de lignes située côté réception et se trouvant en aval de la ligne (SL) d'interface.